# EUROPEAN PATENT SPECIFICATION

(11) **EP 0 594 387 B1**
(45) Date of publication and mention of the grant of the patent: **08.01.1997**
(21) Application number: 93308276.0
(22) Date of filing: 18.10.1993
(51) Int. Cl.: B23Q 16/00, B27C 5/02

(54) **Positioning stopper apparatus for boards**
Positionieranschlagvorrichtung für Platten
Butée de positionnement pour plaques

(30) Priority: 20.10.1992 JP 306514/92
(43) Date of publication of application: 27.04.1994
(73) Proprietor: HEIAN CORPORATION, Hamamatsu-shi, Shizuoka-ken (JP)
(72) Inventor: Suzuki, Nobuyoshi, c/o Heian Corporation, Hamamatsu-shi, Shizuoka-ken (JP)
(74) Representative: Gordon, Michael Vincent

(56) References cited:
- EP-A- 0 485 223
- CH-A- 417 043
- DE-A- 2 027 191
- US-A- 1 800 382
- US-A- 4 583 391
- US-A- 4 947 980

## Description

The present invention relates to positioning rule stopper apparatus for use when superimposed boards are to be positioned on a table such as a suction table in a numerical control router.

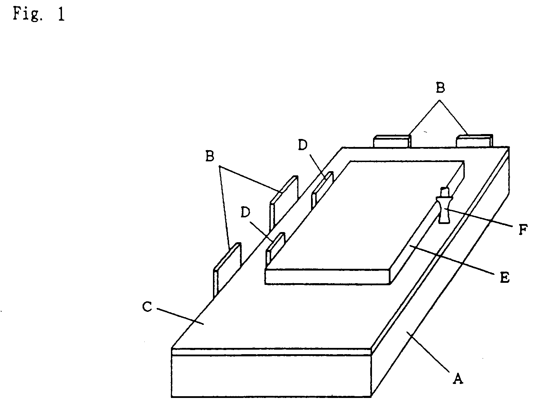

In a known numerical control router, as shown in Fig. 1, rule stoppers B are fixed to two sides of a suction table A. First, a sacrifice board C is positioned by contact of two sides of the sacrifice board C with the rule stoppers B. A process board E is then positioned by contact with rule stoppers D fixed on the sacrifice board C. Conventionally, both the table A and the sacrifice board C would be provided with apertures through which the suction is applied to the process board E.

When the sides of the process board E are to be processed, since the rule stoppers D would interfere with a tool F, the rule stoppers D are formed to be manually removable after the process board E has been set on the sacrifice board C. Because the rule stoppers B and D protrude from the table A and the sacrifice board C, after the process board E has been processed, small pieces and chips of wood on the sacrifice board C and the process board E cannot be collected. Also, when a complex processing of the process board E is executed, the tool F may accidentally collide with the rule stoppers B with mistaken operation and programming, and be broken.

It is, therefore, the primary object of the present invention to provide positioning rule stopper apparatus having rule stoppers which can avoid being obstructive.

It is also known from our EP-A-0485223 (which discloses the preamble of claim 1) for positioning rule stopper apparatus to have a table supported by a supporting bed, and a plurality of rule stoppers movable towards and away from different sides of the table under the control of respective cylinders for use in positioning superimposed boards on the table.

According to the present invention, however, such positioning rule stopper apparatus is characterised in that a first stopper holder which carries a plurality of said rule stoppers is attached to the supporting bed to be located at a predetermined distance from one side of the table, and a second stopper holder which carries a plurality of said rule stoppers is attached to the supporting bed to be located at a predetermined distance from another side of the table, with said first stopper holder carrying at least four of said rule stoppers such that at least two of said rule stoppers are at each of two different heights above a top of the table.

Preferably, at least some of said rule stoppers are movable parallel to an adjacent side of the table, under the control of at least one screw shaft provided with a servomotor, and each of said at least some rule stoppers is provided with a respective clutch engageable with said at least one screw shaft.

At least one contact confirming limit switch may be mounted on each of said rule stoppers.

Positioning rule stopper apparatus according to the present invention preferably forms part of a numerical control router in which the table is a suction table, a sacrifice board is positioned by selected ones of said rule stoppers on top of the suction table, and a process board is positioned by selected ones of said rule stoppers on top of the sacrifice board.

Examples of positioning rule stopper apparatus, in accordance with the present invention, as well as the above-described example of the prior art, are shown in the accompanying drawings wherein:-
Figure 1 is a perspective view of a table with known positioning rule stopper apparatus;
Figure 2 is a plan view of a numerical control router incorporating positioning rule stopper apparatus in accordance with one embodiment of the present invention;
Figures 3, 4 and 5 are, respectively, enlarged plan, side and front views of the positioning rule stopper apparatus shown in Figure 2;
Figure 6 is similar to Figure 3 but shows an enlarged plan view of positioning rule stopper apparatus in accordance with another embodiment of the present invention; and
Figure 7 is a side view of the positioning rule stopper apparatus shown in Figure 6.

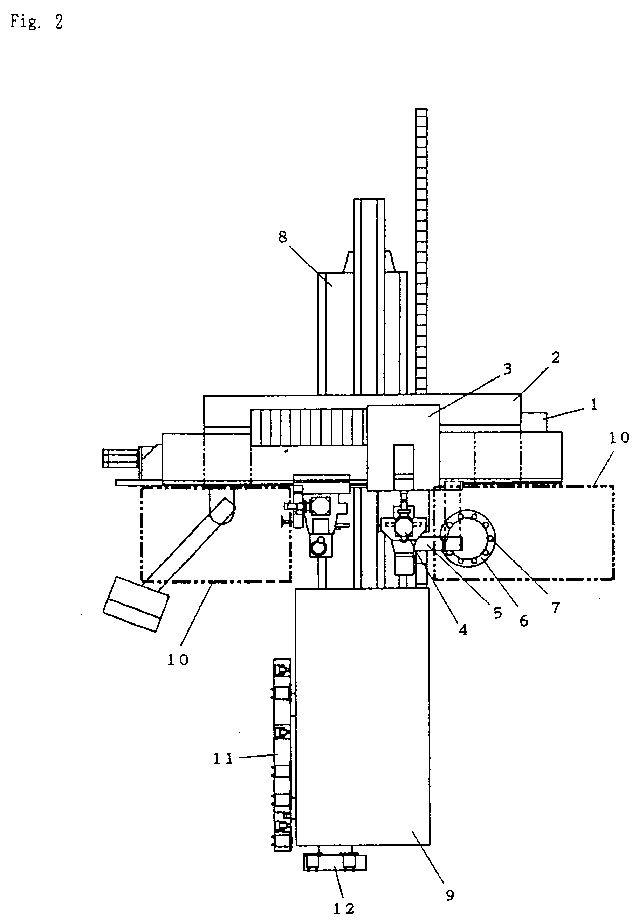

In a numerical control router, as shown in Figure 2, a rail 2 is attached to a supporting bed 1.

A head structure 3 is mounted on the rail 2 to move left and right, and a process head 4 is attached to the head structure 3 to move up and down. The process head 4 is provided with a main shaft motor having a rotary shaft. A tool changer 5 and a tool magazine 6 having a plurality of tools 7 are attached to one side portion of the process head 4. The rotary shaft of the process head 4 is attachable to a chosen one of the tools 7, such as a drill or cutter. Safety fences 10 are located by both side portions of the process head 4. Rails 8 are attached to the supporting bed 1 under the process head 4, and a suction table 9 is mounted on the rails 8 to move at right angles to the movement of the head structure 3.

Positioning rule stopper apparatus 11, 12 is attached to the supporting bed 1 by long and short sides respectively of the suction table 9 for positioning a sacrifice board and a process board put on the suction table 9.

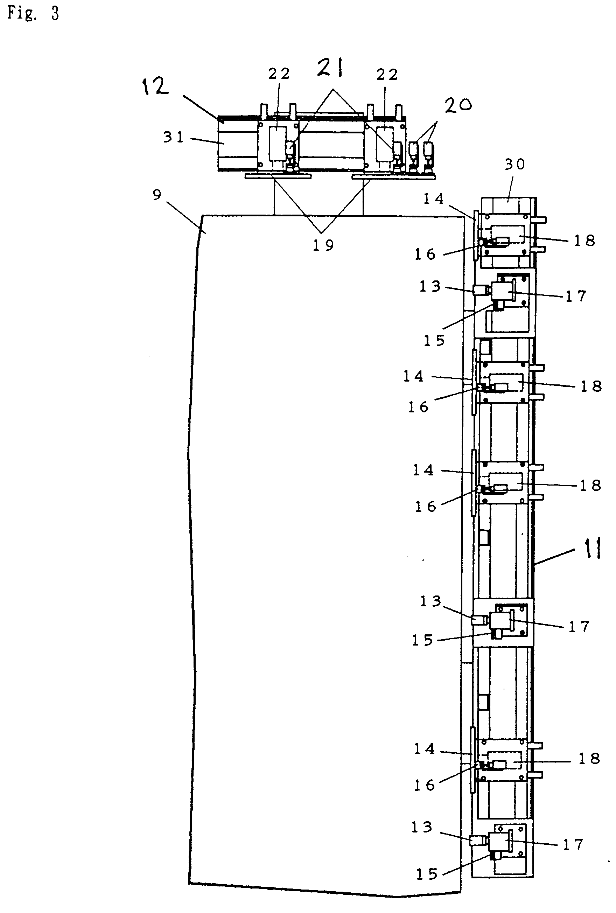

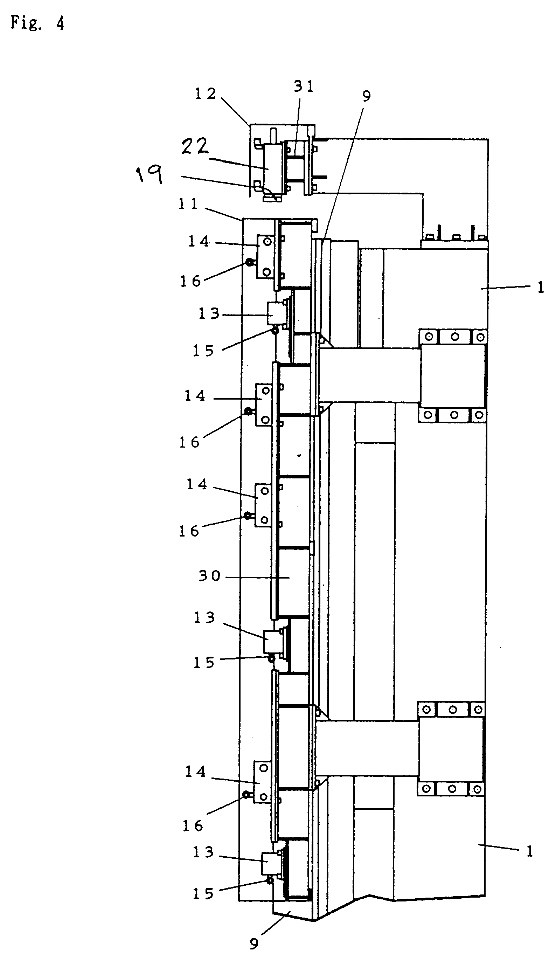

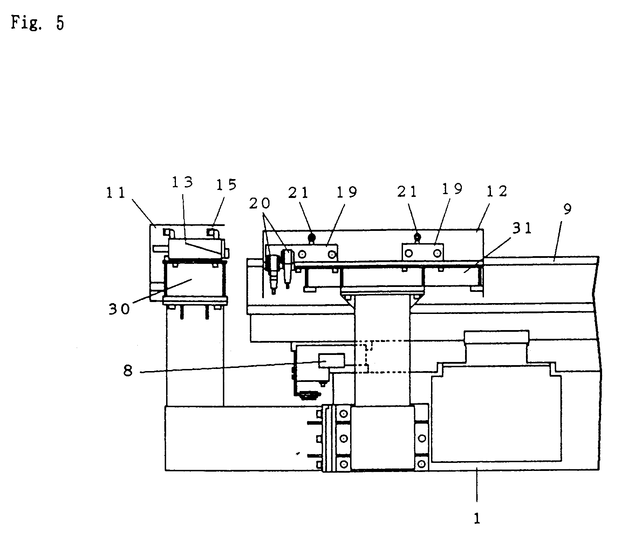

Referring to Figures 3, 4 and 5, the positioning rule stopper apparatus 11 has three rule stoppers 13 for positioning the sacrifice board and four rule stoppers 14 for positioning the process board. All of the rule stoppers 13, 14 are mounted on a stopper holder 30 separate to and apart from the suction table 9. Contact confirming limit switches 15, 16 are fixed on the rule stoppers 13, 14 respectively. The rule stoppers 13, 14 are movable by cylinders 17, 18 respectively towards and away from the adjacent long edge of the suction table 9.

The positioning rule stopper apparatus 12 has two common rule stoppers 19 for positioning the sacrifice board and the process board. The rule stoppers 19 are mounted on a stopper holder 31 similar to the stopper holder 30. Contact confirming limit switches 20 for confirming abutment by the sacrifice board, and contact confirming limit switches 21 for confirming abutment by the process board, are attached to the two rule stoppers 19. Finally, the rule stoppers 19 are movable towards and away from the adjacent short side of the suction table 9 by cylinders 22 similar to the cylinders 17, 18.

In this embodiment, after the rule stoppers 13 have been moved by the cylinders 17 to the long edge of the suction table 9 and the rule stoppers 19 have been moved by the cylinders 22 to the short edge of the suction table 9, the sacrifice board is put on the suction table 9 and moved until correct positioning of the sacrifice board has been confirmed by the contact confirming limit switches 15, 20 whereupon the sacrifice board is held in its correct position by applying suction.

After the sacrifice board has been positioned on the suction table 9, the rule stoppers 13 and the common rule stoppers 19 are returned to their original positions.

Next, after the rule stoppers 14 have been moved by the cylinders 18 to the long edge of the suction table 9 and the rule stoppers 19 have been moved again by the cylinders 22 to the short edge of the suction table 9, the process board is put on the sacrifice board and moved until correct positioning of the process board has been confirmed by the contact confirming limit switches 16, 21.

It will be noted that, even if the sacrifice board and the process board are of different lengths, they can still be positioned by appropriate movement of the rule stoppers 13, 14 and 19 either towards and away from the suction table 9, or parallel to an adjacent side of the suction table 9 by sliding movement along the stopper holders 30, 31 respectively.

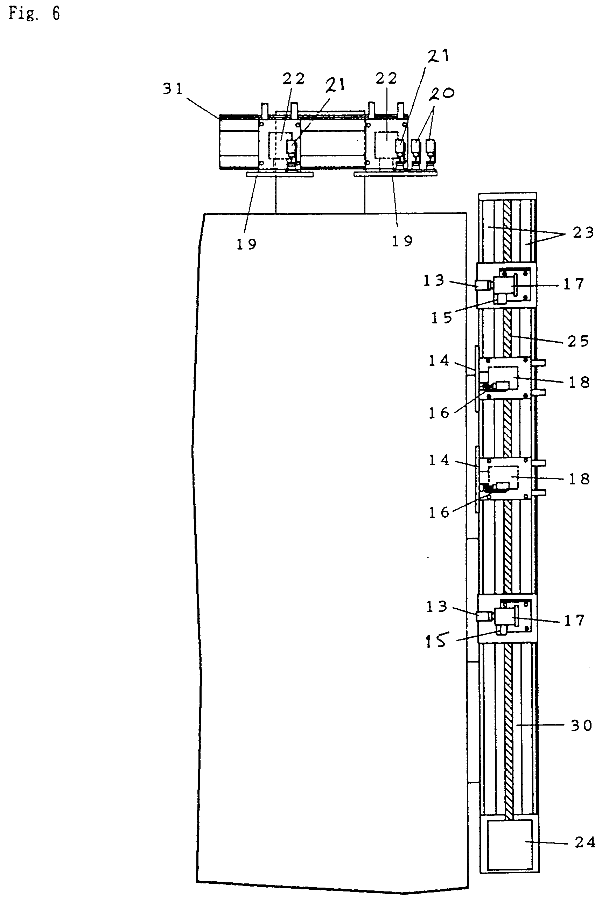

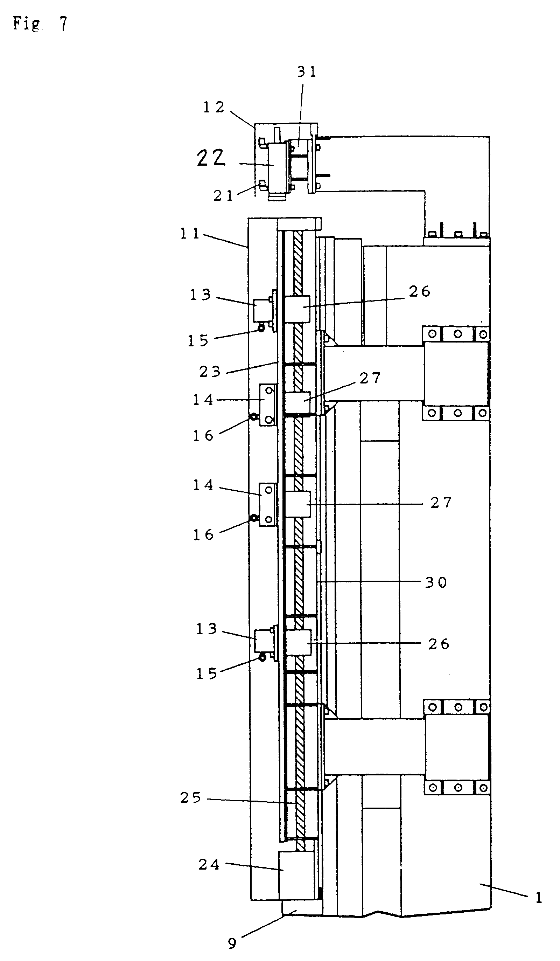

Referring to Figures 6 and 7, the rule stoppers 13, 14 and 19 are all the same as previously described.

In this embodiment, however, the rule stoppers 13 for positioning the sacrifice board, and the rule stoppers 14 for positioning the process board, are movable on rails 23 attached to the stopper holder 30 under the control of at least one screw shaft 25.

More particularly, a servomotor 24 is fixed on the stopper holder 30 at one end of the rails 23, the screw shaft 25 is connected to a rotary shaft of the servomotor 24, and clutches 26, 27 fixed under the rule stoppers 13, 14 respectively are engageable with the screw shaft 25.

In use, when the clutches 26 of the rule stoppers 13 are operated and engaged with the screw shaft 25, and the servomotor 24 is driven, the rule stoppers 13 are slid on the rails 23 to positions which are suitably set according to the length of the sacrifice board. Similarly, when the clutches 27 of the rule stoppers 14 are operated and engaged with the screw shaft 25, and the servomotor 24 is driven, the rule stoppers 14 are slid on the rails 23 to positions which are suitably set according to the length of the process board.

Should the rule stoppers 13, 14 come into engagement with one another, with driving of the servomotor 24, they are merely moved at the same time along the screw shaft 25, thereby protecting against damage resulting from such interference.

In an alternative, two male screw shafts could be rotatably provided with the stopper holder 30, each coupled with a respective servomotor fixed at a respective end of the stopper holder 30, for engagement with female screws of the suitably positioned rule stoppers 13, 14 respectively such that, when one of the servomotors is driven, the positions of the rule stoppers 13 or the rule stoppers 14 are changed in unison.

It should be appreciated that the positioning rule stopper apparatus 12 could if desired be similarly adjustable.

## Claims

1. Positioning rule stopper apparatus (11; 12) comprising a table (9) supported by a supporting bed (1), and a plurality of rule stoppers (13, 14; 19) movable towards and away from different sides of the table (9) under the control of respective cylinders (17, 18; 22) for use in positioning superimposed boards on the table (9), characterised in that a first stopper holder (30) which carries a plurality of said rule stoppers (13, 14) is attached to the supporting bed (1) to be located at a predetermined distance from one side of the table (9), and a second stopper holder (31) which carries a plurality of said rule stoppers (19) is attached to the supporting bed (1) to be located at a predetermined distance from another side of the table (9), with said first stopper holder (30) carrying at least four of said rule stoppers such that at least two of said rule stoppers (13, 14) are at each of two different heights above a top of the table (9).

2. Positioning rule stopper apparatus according to claim 1, characterised in that at least some of said rule stoppers (13, 14) are movable parallel to an adjacent side of the table (9), under the control of at least one screw shaft (25) provided with a servomotor (24), and each of said at least some rule stoppers (13, 14) is provided with a respective clutch (26, 27) engageable with said at least one screw shaft (25).

3. Positioning rule stopper apparatus according to claim 1 or claim 2, characterised in that at least one contact confirming limit switch (15, 16; 20, 21) is mounted on each of said rule stoppers.

4. Positioning rule stopper apparatus according to any preceding claim characterised by forming part of a numerical control router in which the table (9) is a suction table, a sacrifice board is positioned by selected ones of said rule stoppers (13; 19) on top of the suction table, and a process board is positioned by selected ones of said rule stoppers (14; 19) on top of the sacrifice board.

## Patentansprüche

1. Positionierende Lineal-Anschlagvorrichtung (11; 12) mit einem Tisch (9), der von einem Träger (1) gestützt wird, sowie einer Mehrzahl von Linealanschlägen (13, 14; 19), die zur Verwendung bei der Positionierung von übereinandergelegten Tafeln auf dem Tisch (9) durch Steuerung entsprechender Zylinder (17, 18; 22) in Richtung auf verschiedene Seiten des Tisches und von diesen wegbewegbar sind,
dadurch gekennzeichnet, daß ein erster Anschlaghalter (30), der eine Mehrzahl von Linealanschlägen (13, 14) trägt, an dem Träger (1) befestigt ist, um mit einem vorbestimmten Abstand von einer Seite des Tisches (9) positioniert zu werden, und daß ein zweiter Anschlaghalter (31), der eine Mehrzahl von Linealanschlägen (19) trägt, an dem Träger (1) befestigt ist, um mit einem vorbestimmten Abstand von einer anderen Seite des Tisches (9) positioniert zu werden, wobei der erste Anschlaghalter (30) mindestens vier der Linealanschläge in der Weise trägt, daß mindestens zwei der Linealanschläge (13, 14) jeweils an jeder von zwei unterschiedlichen Höhen über einer Oberseite des Tisches (9) liegt.

2. Positionierende Lineal-Anschlagvorrichtung nach Anspruch 1,
dadurch gekennzeichnet, daß mindestens einige der Linealanschläge (13, 14) durch Steuerung mindestens einer Schraubenwelle (25), die mit einem Stellmotor (24) versehen ist, parallel zu einer benachbarten Seite des Tisches (9) beweglich sind, und daß jeder der mindestens einigen Linealanschläge (13, 14) mit einer entsprechenden Kupplung (26, 27), die mit der mindestens einen Schraubenwelle (25) eingreifen kann, versehen ist.

3. Positionierende Lineal-Anschlagvorrichtung nach Anspruch 1 oder 2,
dadurch gekennzeichnet, daß mindestens ein eine Berührung meldender Begrenzungsschalter (15, 16; 20, 21) an jedem der Linealanschläge montiert ist.

4. Positionierende Lineal-Anschlagvorrichtung nach einem der vorhergehenden Ansprüche,
dadurch gekennzeichnet, daß diese einen Teil einer numerisch gesteuerten Führung bildet, bei der der Tisch (9) ein Saugtisch ist, eine Haupttafel durch ausgewählte Linealanschläge (13; 19) auf der Oberseite des Saugtisches positionierbar ist und eine Bearbeitungstafel durch ausgewählte Linealanschläge (14; 19) auf der Oberseite der Haupttafel positionierbar ist.

## Revendications

1. Dispositif (11 ; 12) de butées de positionnement, comprenant une table (9) supportée par un banc de support (1) et une pluralité de butées (13, 14 ; 19) qui peuvent se rapprocher et s'éloigner de différents côtés de la table (9) sous la commande de vérins respectifs (17, 18 ; 22), destiné à être utilisé pour positionner des planches superposées sur la table (9), caractérisé en ce qu'un premier support de butées (30) qui porte une pluralité desdites butées (13, 14) est fixé au banc de support (1) de façon à être placé à une distance prédéterminée d'un premier côté de la table (9) et un deuxième support de butées (31) qui porte une pluralité desdites butées (19) est fixé au banc de support (1) pour être placé à une distance prédéterminée d'un autre côté de la table (9), ledit premier support de butées (30) portant au moins quatre desdites butées de manière qu'au moins deux desdites butées (13, 14) se trouvent à chacune de deux hauteurs différentes au-dessus de la face supérieure de la table (9).

2. Dispositif de butées de positionnement selon la revendication 1, caractérisé en ce qu'au moins certaines desdites butées (13, 14) sont mobiles en déplacement parallèle à un côté adjacent de la table (9), sous la commande d'au moins une vis de transformation du mouvement (25) équipée d'un servomoteur (24) et chacune desdites au moins certaines butées (13, 14) est équipée d'un embrayage respectif (26, 27) qui peut être mis en prise avec ladite au moins une vis de transformation du mouvement (25).

3. Dispositif de butées de positionnement selon la revendication 1 ou la revendication 2, caractérisé en ce qu'au moins un interrupteur de fin de course (15, 16 ; 20, 21) de confirmation du contact est monté sur chacune desdites butées.

4. Dispositif de butées de positionnement selon une quelconque des revendications précédentes, caractérisé en ce qu'il forme une partie d'une toupie à commande numérique dans laquelle la table (9) est une table aspirante, une planche sacrifiée est positionnée par des butées choisies parmi lesdites butées (13 ; 19) sur la face supérieure de la table aspirante, et une planche à travailler est positionnée par des butées choisies parmi lesdites butées (14 ; 19) sur la face supérieure de la planche sacrifiée.
